# EUROPEAN PATENT APPLICATION

(11) **EP 4 726 990 A1**
(43) Date of publication of application: **15.04.2026**
(21) Application number: 24206492.1
(22) Date of filing: 14.10.2024
(51) Int. Cl.: H02M 3/00, H02M 3/335, H02M 1/00, H01F 38/42

(54) **DC-DC CONVERTER**

(71) Applicant: Delta Electronics (Thailand) Public Co., Ltd., Samutprakarn 10280 (TH)
(72) Inventor: Haid, Matthias, 79350 Sexau (DE)
(74) Representative: Keller Schneider Patent- und Markenanwälte AG

(57) **Abstract**

The invention relates to a DC-DC converter with (i) a half-bridge circuit having a first switch (S1) and a second switch (S2), (ii) a half-bridge control circuit (20) configured to control the half-bridge circuit by providing drive signals for selectively opening or closing the first switch (S1) and the second switch (S2), (iii) a transformer with a primary side comprising a primary winding (Np1, Np2) and a secondary side comprising a secondary winding (Ns), wherein the primary winding (Np1, Np2) is split into a first primary winding (Np1) and a second primary winding (Np2), with both the first primary winding (Np1) and the second primary winding (Np2) having a same number of turns, and (iv) a first capacitor (Cr1, C1) and a second capacitor (Cr2, C2) having a same capacitance, with the first capacitor (Cr1, C1) being electrically connected between a split-capacitor node (9) and the first primary winding (Np1) and with the first primary winding (Np1) being electrically connected between the first capacitor (Cr1, C1) and a prime terminal (1) of the first switch (S1), and with the second capacitor (Cr2, C2) being electrically connected between the split-capacitor node (9) and the second primary winding (Np2) and with the second primary winding (Np2) being electrically connected between the second capacitor (Cr2, C2) and a secondary terminal (4) of the second switch (S2). The DC-DC converter further comprises a rectifier circuit (D1, D2, D3, D4, Lout, Cout, S3, S4, C3, C4) connected to the secondary side. The transformer of the DC-DC converter is embodied such that the two overlapping turns of each overlapping pair of (a) a turn of the first primary winding (Np1) and (b) a turn of the secondary winding (Ns), are subject to matching voltage fluctuations during operation of the DC-DC converter. The transformer of the DC-DC converter is further embodied such that the two overlapping turns of each overlapping pair of (a) a turn of the second primary winding (Np2) and (b) a turn of the secondary winding (Ns), are subject to matching voltage fluctuations during operation of the DC-DC converter.

## Description

### Technical Field

The invention relates to a DC-DC converter.

### Background Art

DC-DC converters (direct current to direct current converters) are central components of modern power electronics systems. Two of the defining trends in modern electronics are the miniaturisation of electronic devices and the growth in power density. To enable growing power density and miniaturisation of DC-DC converters, switching frequencies of switches of DC-DC converters have been increased. As without suitable mitigation, higher switching frequencies increase undesirable switching losses, soft switching methods have been developed and for example applied to DC-DC converters such as LLC resonant converters.

To provide a desirable galvanic isolation in the DC-DC converter, DC-DC converters often comprise transformers. For miniaturisation, such transformers are often realised as planar transformers. Transformers, in particular if embodied as planar transformers, of DC-DC converters as known in the prior art often come with large parasitic capacitances, typically leading to common-mode noise issues and electromagnetic interference. Examples of parasitic capacitances are (i) intra-winding capacitances between turns of a winding, for example between turns of a primary winding of a transformer, and (ii) inter-winding capacitances between different windings, for example between a primary winding and a secondary winding of a transformer. Large inter-winding capacitances in particular provide a path for common-mode noise through the DC-DC converter. Another example of parasitic capacitances are parasitic capacitances between a core, in particular a soft-magnetic core, of the transformer and windings of the transformer that face the core.

In DC-DC converters as known in the prior art, to deal with such common-mode noise issues due to large parasitic capacitances in the transformer, bulky filters, in particular comprising large common-mode chokes, are used, leading to increased cost, lack of miniaturisation and decreased power density of DC-DC converters.

### Summary of the invention

It is the object of the invention to create a DC-DC converter which mitigates at least some of the disadvantages of DC-DC converters as known in the prior art.

The solution of the invention is specified by the features of claim 1. The invention relates to a DC-DC converter which comprises a half-bridge circuit, which half-bridge circuit comprises a first switch and a second switch, wherein the first switch comprises a prime terminal and a secondary terminal, with the prime terminal of the first switch being configured to be electrically connected to a positive terminal of a DC input voltage source, wherein the second switch comprises a prime terminal and a secondary terminal, with the secondary terminal of the second switch being configured to be electrically connected to a negative terminal of the DC input voltage source, and wherein the secondary terminal of the first switch and the prime terminal of the second switch are electrically connected to a common half-bridge node. The DC-DC converter further comprises a half-bridge control circuit configured to control the half-bridge circuit by providing drive signals for selectively opening or closing the first switch and the second switch. The DC-DC converter further comprises a transformer with a primary side comprising a primary winding and a secondary side comprising a secondary winding with M turns, M being a positive natural number, wherein the primary winding is split into a first primary winding and a second primary winding, with both the first primary winding and the second primary winding having a same number of turns *N*, with *N* being a positive natural number. The DC-DC converter further comprises a first capacitor and a second capacitor having a same capacitance, with the first capacitor being electrically connected between a split-capacitor node and the first primary winding and with the first primary winding being electrically connected between the first capacitor and the prime terminal of the first switch, the first capacitor and the first primary winding forming a first arm between the split-capacitor node and the prime terminal of the first switch, and with the second capacitor being electrically connected between the split-capacitor node and the second primary winding and with the second primary winding being electrically connected between the second capacitor and the secondary terminal of the second switch, the second capacitor and the second primary winding forming a second arm between the split-capacitor node and the secondary terminal of the second switch, wherein the split-capacitor node is electrically connected to the half-bridge node. The secondary side of the transformer is electrically connected to a rectifier circuit, with the DC-DC converter comprising the rectifier circuit. The transformer of the DC-DC converter is embodied such that the two overlapping turns of each overlapping pair of (a) a turn of the first primary winding and (b) a turn of the secondary winding, are subject to matching voltage fluctuations during operation of the DC-DC converter. The transformer of the DC-DC converter is further embodied such that the two overlapping turns of each overlapping pair of (a) a turn of the second primary winding and (b) a turn of the secondary winding, are subject to matching voltage fluctuations during operation of the DC-DC converter.

The inventive DC-DC converter may be embodied as a unidirectional or as a bidirectional DC-DC converter. Overall, the DC-DC converter is configured such that it transforms an input voltage of a first voltage level to an output voltage of a second voltage level, which second voltage level may be the same as or different from the first voltage level. The input voltage may be provided by a DC input voltage source.

Two circuit nodes are electrically connected to one another if a connection exists between them that allows currents to flow between the two circuit nodes. The respective connection between the two circuit nodes may be a simple wire, for example, so that substantially same electric potentials may be present at both circuit nodes during operation of the DC-DC converter. Alternatively, the connection may be such that two circuit nodes that are electrically connected to one another experience different electric potentials during operation of the DC-DC converter; in an equivalent circuit of the DC-DC converter, an inductance may be present between the two electrically connected circuit nodes, for example.

A described further below, the DC-DC converter may be embodied as a half-bridge converter, or as a dual active half-bridge converter, or as an LLC resonant converter, for example. For all such specific converter types, in the prior art detailed control schemes are known for controlling the first switch and the second switch of the half-bridge circuit (as well as for controlling any switches of the rectifier circuit, if present). For the DC-DC converter according to the invention, no modification of such known control schemes is required, i.e. known control schemes may be employed. In case the DC-DC converter is embodied as an LLC resonant converter, for example, known control schemes may be used which enable soft switching. The switches are preferentially embodied as semiconductor switches.

For DC-DC converters that are embodied as LLC resonant converters, for example, in the prior art so-called split-capacitor LLC resonant converters are known that have beneficial root mean square input current as well as beneficial startup conditions as compared to known LLC resonant converters without split capacitors. In such known split-capacitor LLC resonant converters, the primary winding is not split. By splitting the primary winding into a first primary winding and into a second primary winding and electrically connecting them according to the inventive DC-DC converter, a symmetrical arrangement is produced in which similar currents flow through the first primary winding and the second primary winding during operation of the DC-DC converter. Conceptually assuming that before splitting of the primary winding, the primary winding would have had *N* turns, it transpires that in ideal conditions the currents flowing through the first primary winding and through the second primary winding are halved in magnitude compared to the hypothetical current that would have flowed through the primary winding without splitting. Similar considerations apply for other types of DC-DC converters such as half-bridge converters or dual active half-bridge converters. For a transformer embodied as a planar transformer, for example, a smaller tracl<width (to ensure similar losses) may therefore be used for the first primary winding and the second primary winding compared to a trackwidth which would have been required for a primary winding without splitting. Similarly, for wire-wound transformers, smaller wire diameters may be used. Advantageously, the inventive DC-DC converter may therefore be constructed with similar spatial requirements as DC-DC converters without split primary windings, while at the same time making the DC-DC converter amenable to common-mode reduction techniques as described in the following.

Due to the structure of the inventive DC-DC converter, one end of both the first primary winding and of the second primary winding respectively experiences a substantially constant electric potential during operation of the DC-DC converter. Specifically, the turn of the first primary winding that is electrically connected to the prime terminal of the first switch is electrically connected to the positive input terminal of the DC input voltage source during operation of the DC-DC converter; the turn of the second primary winding that is electrically connected to the secondary terminal of the second switch is electrically connected to the negative input terminal of the DC input voltage source. Accordingly, at these respective turns (which may be termed quiet turns) of the first primary winding and of the second primary winding, a substantially constant electric potential is present during operation of the DC-DC converter. During operation of the DC-DC converter, the largest voltage fluctuations may be present at the turn of the first primary winding that is electrically connected to the first capacitor and at the turn of the second primary winding that is electrically connected to the second capacitor; the size of the fluctuations may increase linearly between the quiet turns and the turns facing the first capacitor and the second capacitor. Similarly, depending on whether the secondary winding is centre-tapped or not centre-tapped, during operation of the DC-DC converter, a turn of the secondary winding experiences a substantially constant electric potential: for a centre-tapped secondary winding, the centrally tapped turn may have a substantially constant electric potential during operation, while for a secondary winding without central tapping one of the outer turns (at which outer turn the secondary winding may be electrically connected to a DC output terminal of the DC-DC converter during operation) of the secondary winding may experience a substantially constant electric potential during operation.

For large voltage changes, in particular expressed as derivative with respect to time, of the voltage between two overlapping turns of each overlapping pair (formed by a turn of the primary winding and a turn of the secondary winding), the parasitic capacitances between the overlapping turns would be subject to these large voltage changes and large common-mode noise currents would flow through a DC-DC converter. In the DC-DC converter according to the invention, the first primary winding, the second primary winding and the secondary winding are distributed such in the transformer that the two turns in each overlapping pair experience similar electric potential changes during the operation of the DC-DC converter so that no large voltage changes may occur between the overlapping turns: accordingly, common-mode noise currents between overlapping pairs of turns of the primary winding and of the secondary winding may thus be advantageously reduced during operation of the inventive DC-DC converter. For example, the quiet turn of the first primary winding may be placed such that it overlaps with the quiet turn of the secondary winding; similarly, the quiet turn of the second primary winding may be placed such that it overlaps with the quiet turn of the secondary winding.

The specification of matching voltage fluctuations of the two turns of each overlapping pair may be described as follows: the voltage fluctuation at a turn may be defined as the derivative with respect to time of the electric potential difference between the electric potential at the respective turn and ground, for example. Matching voltage fluctuations are present between the two turns of each overlapping pair if these time derivatives are similar at the two turns, similarity for example being measured with some suitable distance metric, for example the squared distance metric.

As parasitic capacitances that may lead to common-mode noise during operation of the DC-DC converter are particularly prominent in transformers that have large overlapping areas between turns of the primary winding and turns of the secondary winding, the inventive DC-DC converter may advantageously provide largest benefits in case transformers such as planar transformers or edge-wise wound transformers are used.

In an embodiment of the DC-DC converter according to the invention, the DC-DC converter comprises at least one further pair of arms parallel to the first arm and the second arm, with each further pair of arms comprising (i) a further upper arm between the split-capacitor node and the prime terminal of the first switch, which further upper arm comprises a further upper primary winding and a further upper capacitor, with the further upper primary winding having the same number of turns *N* as the first primary winding and the second primary winding, with the further upper capacitor having a same capacitance as the first capacitor and the second capacitor, and with the further upper capacitor being electrically connected between the split-capacitor node and the further upper primary winding and with the further upper primary winding being electrically connected between the further upper capacitor and the prime terminal of the first switch, and (ii) a further lower arm between the split-capacitor node and the secondary terminal of the second switch, which further lower arm comprises a further lower primary winding and a further lower capacitor, with the further lower primary winding having the same number of turns *N* as the first primary winding and the second primary winding and with the further lower capacitor having a same capacitance as the first capacitor and the second capacitor, and with the further lower capacitor being electrically connected between the split-capacitor node and the further lower primary winding and with the further lower primary winding being electrically connected between the further lower capacitor and the secondary terminal of the second switch.

The DC-DC converter may be implemented with an interleaved structure that advantageously may decrease AC resistance of the DC-DC converter. The inventive concept of placing turns of the primary winding close to turns of the secondary winding that experience similar voltage fluctuations during operation of the DC-DC converter may be extended to the interleaved structure, thereby at the same time advantageously reducing both common-mode noise and AC resistance.

In a further embodiment of the DC-DC converter according to the invention, (i) the transformer comprises a first fixed-potential overlapping pair of (a) the turn of the first primary winding that is electrically connected to the prime terminal of the first switch or of the turn of a further upper primary winding that is electrically connected to the prime terminal of the first switch, and (b) a turn of the secondary winding that is subject to a substantially static potential during operation of the DC-DC converter, and/or (ii) the transformer comprises a second fixed-potential overlapping pair of (a) the turn of the second primary winding that is electrically connected to the secondary terminal of the second switch or of the turn of a further lower primary winding that is electrically connected to the secondary terminal of the second switch, and (b) a turn of the secondary winding that is subject to a substantially static potential during operation of the DC-DC converter.

In a further embodiment of the DC-DC converter according to the invention, the transformer is embodied as a planar transformer comprising a plurality of layers, wherein between any two adjacent layers of the plurality of layers, a dielectric medium, in particular embodied as FR4, is arranged, and wherein the turns of the first primary winding, the turns of the second primary winding, the turns of the secondary winding and the turns of any further upper primary winding and of any further lower primary winding are arranged in the plurality of layers.

Instead of FR4, other materials may be used as well as dielectric medium. In each layer of the planar transformer, one or more turns of the windings of the transformer may be arranged. The planar transformer may be embodied as a multi-layer planar transformer, or the planar transformer may be embodied as a stacked double-layer planar transformer in which a plurality of double-layer planar transformers are stacked one on top of another. In case the planar transformer is embodied as a stacked double-layer planar transformer, between two adjacent double-layer planar transformers, a different dielectric medium (for example with smaller permittivity) may be used than within the double-layer planar transformer, thereby advantageously further reducing parasitic capacitances in the planar transformer which may reduce common-mode noise during operation of the DC-DC converter. Clearly, the turns of the further upper primary windings and further lower primary windings are only arranged in the plurality of layers in case the DC-DC converter comprises further pairs of arms parallel to the first arm and the second arm. The distribution of turns in the layers of the planar transformer typically depends on both *N*, i.e. the number of turns of the first primary winding, of the second primary winding, of any further upper primary windings and of any further lower primary windings, and on *M,* i.e. the number of turns of the secondary winding.

In a further embodiment of the DC-DC converter according to the invention, the two outer layers of the planar transformer comprise turns of the secondary winding.

The planar transformer comprises a highest layer and a lowest layer, all other remaining layers of the planar transformer lying between the highest layer and the lowest layer. The two outer layers therefore correspond to the highest layer and the lowest layer. The soft-magnetic, in particular ferrite, core of the planar transformer is typically arranged adjacent to both the highest layer and the lowest layer of the planar transformer. To reduce common-mode noise from the primary windings through the core of the planar transformer during operation of the DC-DC converter, only turns of the secondary winding may face the core.

In a further embodiment of the DC-DC converter according to the invention, for the first fixed-potential overlapping pair, the respective turn of the first primary winding or of the further upper primary winding is arranged in a first layer of the planar transformer that is adjacent to a second layer of the planar transformer in which the respective turn of the secondary winding is arranged.

The first layer may be any layer of the planar transformer, i.e. the first layer may be the highest layer, the lowest layer or any in-between layer. The second layer is adjacent to the first layer. Between any two adjacent layers, no other layers are present but only the dielectric medium. Preferentially, the number of turns in the first layer and in the second layer are matched, i.e. the first layer and the second layer comprise a same number of turns.

In a further embodiment of the DC-DC converter according to the invention, for the second fixed-potential overlapping pair, the respective turn of the second primary winding or of the further lower primary winding is arranged in a third layer of the planar transformer that is adjacent to a fourth layer of the planar transformer in which the respective turn of the secondary winding is arranged.

The third layer may be any layer of the planar transformer, i.e. the third layer may be the highest layer, the lowest layer or any in-between layer. Preferentially, the number of turns in the third layer and in the fourth layer are matched, i.e. the third layer and the fourth layer comprise a same number of turns.

In a further embodiment of the DC-DC converter according to the invention, (i) the second layer and the fourth layer are physically distinct layers of the planar transformer, wherein the parts of the secondary winding arranged in the second layer and the fourth layer are electrically connected to one another, or (ii) the second layer and the fourth layer are embodied as a common layer of the planar transformer.

In a further embodiment of the DC-DC converter according to the invention, the turn of the first primary winding that is electrically connected to the first capacitor is arranged in a fifth layer of the planar transformer, and the turn of the second primary winding that is electrically connected to the second capacitor is arranged in a sixth layer of the planar transformer, with the fifth layer being adjacent to the sixth layer.

As the turn of the first primary winding that is electrically connected to the first capacitor and the turn of the second primary winding that is electrically connected to the second capacitor experience the largest, but at the same time similar, voltage variations during operation of the DC-DC converter, these turns are advantageously placed in adjacent layers of the planar transformer.

In a further embodiment of the DC-DC converter according to the invention, any two overlapping layers of the planar transformer, any two overlapping layers being a layer in which at least one turn of the primary side is arranged and an adjacent layer in which at least one turn of the secondary side is arranged, are embodied in a symmetrical manner.

Preferentially, in any two adjacent layers of the planar transformer in which overlapping pairs are arranged, a similar number of turns are present in the two adjacent layers; further preferentially, the two adjacent layers have a similar layout and routing of turns. Advantageously, common-mode noise may thus be further reduced during operation of the DC-DC converter.

In a further embodiment of the DC-DC converter according to the invention, the DC-DC converter is embodied as a half-bridge converter, with electric potentials at the half-bridge node and at the split-capacitor node being substantially equal during operation of the half-bridge converter.

In case the DC-DC converter is embodied as a half-bridge converter, different rectifier circuits may be used in principle. The rectifier circuit may be embodied as a bridge rectifier, for example; the rectifier circuit may also be embodied as a full-wave rectifier, for example, with the secondary winding of the transformer being centre-tapped. The rectifier circuit may also be embodied as a voltage doubler or as a current doubler, for example. The rectifier circuit may comprise active switches and/or passive diodes. Other rectifier circuits are in principle also feasible, however. A bridge rectifier may comprise four diodes in a bridge configuration, for example; a bridge rectifier is configured to convert an AC input received from the secondary winding of the transformer into a DC output. A full-wave rectifier may comprise two diodes, with the transformer being centre-tapped; a full-wave rectifier is configured to convert an AC input received from secondary winding of the transformer into a DC output. The secondary winding of the transformer may be centre-tapped by connecting a central turn of the secondary winding to ground, for example.

In case the DC-DC converter is embodied as a half-bridge converter, the half-bridge node and the split-capacitor node may be physically coincident or connected to one another through a conductor, e.g. a conductive wire or conductive track.

In a further embodiment of the DC-DC converter according to the invention, the DC-DC converter is embodied as a dual active half-bridge converter, wherein the dual active half-bridge converter is embodied such that in an equivalent circuit of the dual active half-bridge converter, an inductance is present between the half-bridge node and the split-capacitor node, which inductance is in particular at least partly provided by a leakage inductance of the transformer, and wherein the rectifier circuit comprises a third capacitor and a fourth capacitor having a same capacitance, with the third capacitor being electrically connected between a first end of the secondary winding and a positive terminal of a DC output and with the fourth capacitor being electrically connected between the first end of the secondary winding and a negative terminal of the DC output, and wherein the rectifier circuit further comprises a second half-bridge circuit comprising a third switch and a fourth switch, with a prime terminal of the third switch being electrically connected to the positive terminal of the DC output, with a secondary terminal of the fourth switch being electrically connected to the negative terminal of the DC output, and with a secondary terminal of the third switch and a prime terminal of the fourth switch being electrically connected to a common second half-bridge node, with the second half-bridge node being electrically connected to a second end of the secondary winding, and wherein a second half-bridge control circuit, in particular embodied as the half-bridge control circuit, is configured to control the second half-bridge circuit by providing drive signals for selectively opening or closing the third switch and the fourth switch.

Advantageously, using a dual active half-bridge converter, a bidirectional DC-DC converter may be provided. The switches of the second half-bridge may be controlled by the same half-bridge control circuit that is configured to control the first switch and the second switch, or a dedicated second half-bridge control circuit may be employed. In general, the timing of turning on/off the third switch and the fourth switch is adapted to the timing of turning on/off the first switch and the second switch.

In a further embodiment of the DC-DC converter according to the invention, the DC-DC converter is embodied as an LLC resonant converter, with the LLC resonant converter comprising a resonant tank circuit, wherein the resonant tank circuit and/or the transformer are embodied such that in an equivalent circuit of the LLC resonant converter, the resonant tank circuit and/or the transformer provide a resonant inductance between the half-bridge node and the split-capacitor node, wherein the resonant tank circuit comprises the first capacitor and the second capacitor. As for the half-bridge converter discussed above, different rectifier circuits may be used in principle in case the DC-DC converter is embodied as LLC resonant converter.

In a further embodiment of the DC-DC converter according to the invention, the resonant tank circuit comprises a resonant inductor, wherein the resonant inductance is at least partly provided by the resonant inductor, and in particular wherein the resonant inductance is at least partly provided by a leakage inductance of the transformer.

In a further embodiment of the DC-DC converter according to the invention, the DC-DC converter further comprises a low-pass filter circuit that is electrically connected to the rectifier circuit. The low-pass filter circuit advantageously is simple to construct and requires a small amount of space as bulky common-mode chokes may be reduced in size. The DC-DC converter may thus advantageously be built in a compact manner.

Other advantageous embodiments and combinations of features come out from the detailed description below and the entirety of the claims.

### Brief description of the drawings

The drawings used to explain the embodiments show:
- Fig. 1 shows: in Fig. 1a a split-capacitor LLC resonant converter as known in the prior art, while in Fig. 1b an inventive split-capacitor LLC resonant converter is shown and in Fig. 1c a possible layout of the transformer of Fig. 1b as a planar transformer is shown;
- Fig. 2 shows: two different inventive split-capacitor LLC resonant converters and the respective possible layouts of their transformers as planar transformers; and
- Fig. 3 shows: an inventive half-bridge converter in Fig. 3a and possible layouts of the transformer of the half-bridge converter as a planar transformer in Fig. 3b, and further shows an inventive dual active half-bridge converter in Fig. 3c and possible layouts of the transformer of the dual active half-bridge converter in Fig. 3d.

In the figures, the same components are given the same reference signs.

### Preferred embodiments

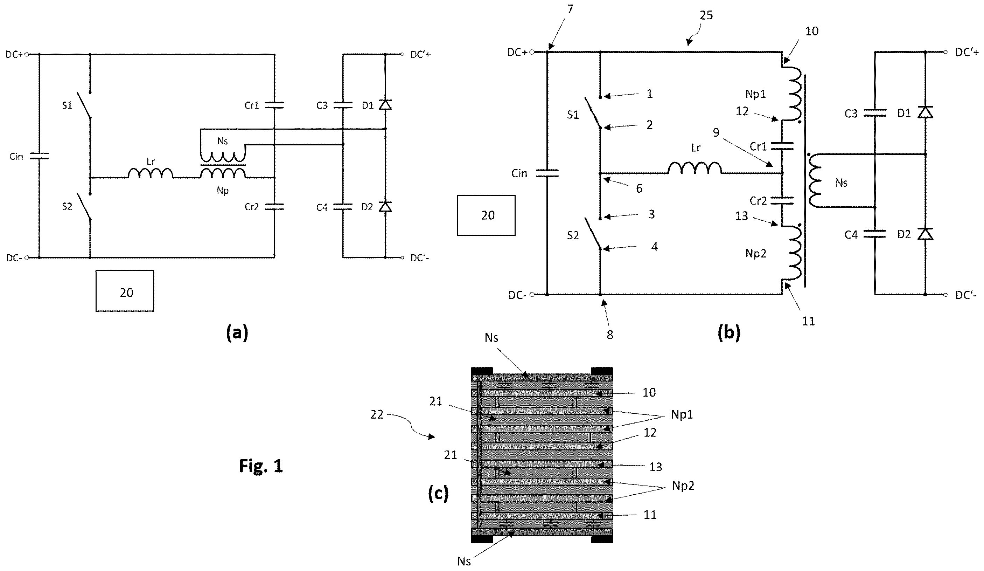

**Fig. 1a** shows a split-capacitor LLC resonant converter as known in the prior art, while **Fig. 1b** shows a split-capacitor LLC resonant converter in accordance with the invention. The only difference between Fig. 1a and Fig. 1b is that the primary winding Np of Fig. 1a is split into a first primary winding Np1 and a second primary winding Np2 in Fig. 1b and positioned differently in the circuit. Accordingly, in the following, Fig. 1b is described, while the main differences to the split-capacitor LLC resonant converter as known in the prior art and shown in Fig. 1a are highlighted when needed.

The inventive split-capacitor LLC resonant converter 25 of Fig. 1b is configured to transform a DC input voltage into a DC output voltage. The LLC resonant converter 25 of Fig. 1b is configured to be connected to a positive terminal 7 and a negative terminal 8 of a DC input voltage source. At the voltage input, a capacitance Cin is further provided as customary in the state of the art. The LLC resonant converter of Fig. 1b comprises a half-bridge circuit with a first switch S 1 and a second switch S2. The first switch S1 has a prime terminal 1, which prime terminal 1 is configured to be connected to the positive terminal 7, and the second switch S2 has a secondary terminal 4, which secondary terminal 4 is configured to be connected to the negative terminal 8. The secondary terminal 2 of the first switch S1 and the prime terminal 3 of the second switch S2 are connected to a common half-bridge node 6. Accordingly, during operation of the LLC resonant converter 25, at both the prime terminal 1 and the secondary terminal 4 a substantially constant electric potential is present, while the electric potential at the half-bridge node 6 varies as a consequence of the switching of the first switch S1 and of the second switch S2. The first switch S1 and the second switch S2 are controlled through a half-bridge control circuit 20 that provides drive signals to the first switch S1 and the second switch S2. The half-bridge control circuit 20 typically bases the provided drive signals on a size of a load attached to the DC output of the LLC resonant converter.

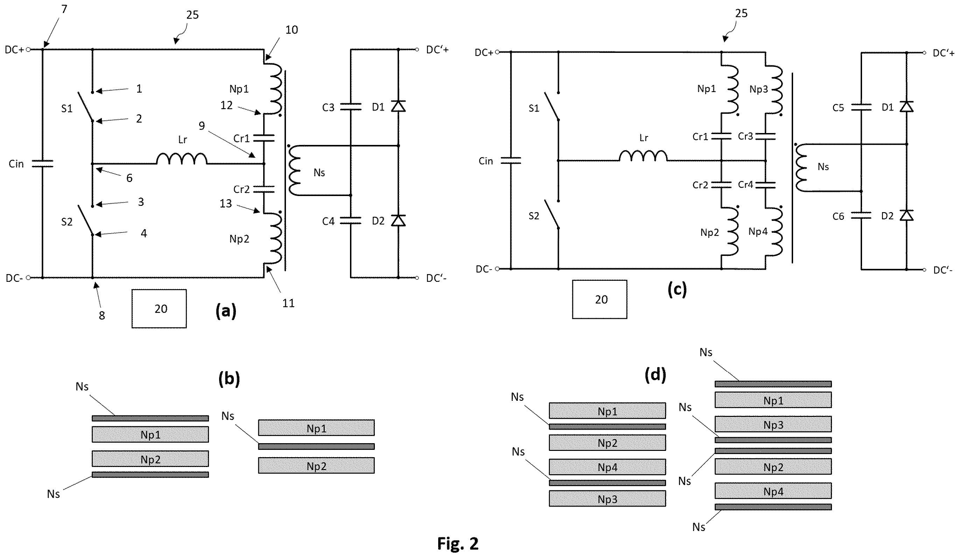

As is well known, an LLC resonant converter generally comprises a resonant tank with two inductances and one capacitance. In Fig. 1a and Fig. 1b (and later in Fig. 2a and Fig. 2b), only one inductance, namely the resonant inductance Lr, is shown, while inductance Lp is not depicted. Inductance Lp in general is parallel to the windings and may typically be provided through the transformer. In a split-capacitor half-bridge LLC resonant converter as shown in both Fig. 1a and Fig. 1b, the capacitance is split into two capacitances Cr1 and Cr2. For such a split-capacitor half-bridge LLC resonant converter, the input current, i.e. the current flowing from the positive terminal 7 into the circuit, is the same as in a full-bridge LLC resonant converter. Further, while the DC value of the input current for a split-capacitor half-bridge LLC resonant converter is the same as for a conventional half-bridge LLC resonant converter, in a split-capacitor half-bridge LLC resonant converter, peak values are halved and root mean square values are reduced by 1/V2. It is further known that split-capacitor half-bridge LLC resonant converters may show improved start-up behaviour.

At both ends of the primary winding Np of Fig. 1a, during operation of the converter, fluctuating electric potentials are present. In contrast to Fig. 1a, in Fig. 1b, the primary winding is split into a first primary winding Np1 and a second primary winding Np2, which two primary windings Np1 and Np2 are connected as shown in Fig. 1b. One outer turn 10 of the first primary winding Np1 and one outer turn 11 of the second primary winding Np2 experience a substantially constant electric potential during operation of the converter 25, while the other outer turns 12, 13 of the first primary winding Np1 and of the second primary winding Np2 facing the first capacitor Cr1 and the second capacitor Cr2 have large variations in the applied electric potential during operation of the LLC resonant converter 25. The secondary winding Ns further also comprises a turn with a substantially constant electric potential during operation: this turn may be an outer turn of the secondary winding Ns, or a centre-tapped turn. In Fig. 1b, the polarity of windings of the transformer is further indicated through the usual dot convention. The transformer of both Fig. 1a and Fig. 1b, the transformer comprising the primary winding Np and the secondary winding Ns respectively the first primary winding Np1, the second primary winding Np2 and the secondary winding Ns, is connected on its secondary side to a rectifier circuit embodied as a voltage doubler circuit, i.e. the secondary winding Ns is connected to the voltage doubler circuit. The voltage doubler circuit in Fig. 1a and Fig. 1b is embodied as a Delon circuit with a bridge topology, i.e. the voltage doubler circuit in Fig. 1a and Fig. 1b is a full-wave voltage doubler and the secondary winding Ns is not centre-tapped. The voltage doubler circuit of Fig. 1a and Fig. 1b comprises two capacitances C3, C4 and two diodes D1, D2, with the secondary winding Ns being electrically connected on one of its ends between the two diodes D1, D2 and on its other ends between the two capacitances C3, C4. During operation of the circuits of both Fig. 1a and Fig. 1b, the end of the secondary winding Ns that is electrically connected between the two capacitances C3, C4 may experience a substantially constant electric potential. Instead of the voltage doubler circuit shown in Fig. 1a and Fig. 1b, other rectifier circuits may be used as well, however.

Typically, parasitic capacitances are present in a transformer. Parasitic capacitances may be present between primary windings and secondary windings, or within turns of primary windings, or within turns of secondary windings, or between primary windings and a soft-magnetic core of the transformer, for example. Especially the parasitic capacitances between primary windings and secondary windings may cause common-mode noise issues during operation. Parasitic capacitances may be particularly pronounced in transformers such as planar transformers or edge-wise wound transformers.

To mitigate common-mode noise during operation, in **Fig. 1c** an exemplary arrangement of a planar transformer 22 is shown in which the turns of the first primary winding Np 1, of the second primary winding Np2 and of the secondary winding Ns are placed in such a way in layers that common-mode noise is reduced. Specifically, the quiet turns 10 and 11 facing the positive terminal 7 and the negative terminal 8 are arranged in two layers adjacent to a highest layer and a lowest layer of the planar transformer 22 of Fig. 1c, respectively, while the turns of the secondary winding Ns are arranged in the highest layer and the lowest layer and are electrically connected to each other: this way, common-mode noise currents are advantageously reduced during operation. As further shown in Fig. 1c, the turns 12 and 13 facing the two capacitors Cr1 and Cr2 are also arranged in adjacent layers as these turns 12, 13 experience similar electric potential variations during operation of the LLC resonant converter 25 due to symmetry. The remaining windings of both the first primary winding Np1 and of the second primary winding Np2 are hidden in intermediate layers of the planar transformer 22: accordingly, they contribute little to the occurrence of common-mode noise currents. As in the highest layer and in the lowest layer of Fig. 1c, only turns of the secondary winding are arranged, common-mode noise currents between the primary windings and the core of the transformer are further reduced. Between any adjacent layers of the planar transformer, a dielectric medium is arranged.

**Fig. 2a** corresponds to Fig. 1b, while the layer arrangement of a planar transformer as shown in **Fig. 2b** on the left corresponds to the layer arrangement as shown in Fig. 1c. As shown in Fig. 2b on the right, the turns of the secondary winding Ns could also be placed in an intermediate layer of a planar transformer. To reduce common-mode noise, in this case the quiet turns 10 and 11 of the primary windings Np1 and Np2 are placed in layers that are adjacent to the intermediate layer in which the secondary winding Ns is positioned.

**Fig. 2c** corresponds to Fig. 1b and Fig. 2a, the main difference being the presence of additional primary windings Np3 and Np4 as well as capacitors Cr3 and Cr4. Advantageously, a high degree of interleaving can thus be provided as shown in the two layout options of **Fig. 2d.** In the layout of Fig. 2d, quiet turns of the primary windings Np 1, Np2, Np3 and Np4 are placed in layers that are adjacent to layers in which the secondary winding Ns is placed.

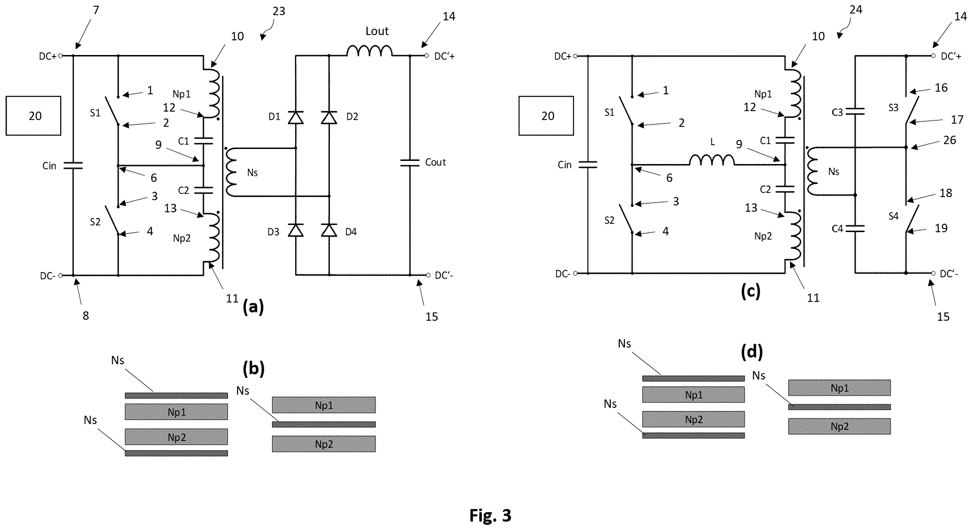

**Fig. 3a** shows an inventive half-bridge converter 23. The main difference between the circuit representation of the half-bridge converter 23 of Fig. 3a and the circuit representation of the split-capacitor half-bridge LLC resonant converter 25 of Fig. 2a is the absence of resonant inductance Lr in Fig. 3a. The secondary winding Ns of the half-bridge converter 23 is electrically connected to a bridge rectifier comprising four diodes D1, D2, D3 and D4 as well as a subsequent inductance Lout and capacitance Cout which provide for a desired voltage level at the DC output. In **Fig. 3b****,** two possible layouts are shown for a realisation of the transformer of Fig. 3a as planar transformer, the two layouts corresponding to the layouts of Fig. 2b.

**Fig. 3c** shows an inventive dual active half-bridge converter 24. The circuit representation of the dual active half-bridge converter 24 is similar to the circuit representation of the LLC resonant converter 25 of Fig. 2a, the main difference being the rectifier circuit. Through the two capacitances C3 and C4, a desired voltage level can be achieved on the secondary side. The rectifier circuit of Fig. 3c comprises two switches S3 and S4. In **Fig. 3d,** two possible layouts are shown for a realisation of the transformer of Fig. 3c as planar transformer, the two layouts corresponding to the layouts of Fig. 2b.

## Claims

1. DC-DC converter, comprising (i) a half-bridge circuit, which half-bridge circuit comprises a first switch (S1) and a second switch (S2), wherein the first switch (S1) comprises a prime terminal (1) and a secondary terminal (2), with the prime terminal (1) of the first switch (S1) being configured to be electrically connected to a positive terminal (7) of a DC input voltage source, wherein the second switch (S2) comprises a prime terminal (3) and a secondary terminal (4), with the secondary terminal (4) of the second switch (S2) being configured to be electrically connected to a negative terminal (8) of the DC input voltage source, and wherein the secondary terminal (2) of the first switch (S1) and the prime terminal (3) of the second switch (S2) are electrically connected to a common half-bridge node (6), (ii) a half-bridge control circuit (20) configured to control the half-bridge circuit by providing drive signals for selectively opening or closing the first switch (S1) and the second switch (S2), (iii) a transformer with a primary side comprising a primary winding (Np 1, Np2) and a secondary side comprising a secondary winding (Ns) with Mturns, *M* being a positive natural number, wherein the primary winding (Np 1, Np2) is split into a first primary winding (Np1) and a second primary winding (Np2), with both the first primary winding (Np1) and the second primary winding (Np2) having a same number of turns *N*, with *N* being a positive natural number, wherein the DC-DC converter comprises a first capacitor (Cr1, C1) and a second capacitor (Cr2, C2) having a same capacitance, with the first capacitor (Cr1, C1) being electrically connected between a split-capacitor node (9) and the first primary winding (Np1) and with the first primary winding (Np1) being electrically connected between the first capacitor (Cr1, C1) and the prime terminal (1) of the first switch (S1), the first capacitor (Cr1, C1) and the first primary winding (Np1) forming a first arm between the split-capacitor node (9) and the prime terminal (1) of the first switch (S1), and with the second capacitor (Cr2, C2) being electrically connected between the split-capacitor node (9) and the second primary winding (Np2) and with the second primary winding (Np2) being electrically connected between the second capacitor (Cr2, C2) and the secondary terminal (4) of the second switch (S2), the second capacitor (Cr2, C2) and the second primary winding (Np2) forming a second arm between the split-capacitor node (9) and the secondary terminal (4) of the second switch (S2), wherein the split-capacitor node (9) is electrically connected to the half-bridge node (6), and wherein the secondary side of the transformer is electrically connected to a rectifier circuit (D1, D2, D3, D4, Lout, Cout, S3, S4, C3, C4), and (iv) the rectifier circuit (D1, D2, D3, D4, Lout, Cout, S3, S4, C3, C4, C5, C6), wherein the transformer is embodied such that the two overlapping turns of each overlapping pair of (a) a turn of the first primary winding (Np1) and (b) a turn of the secondary winding (Ns), are subject to matching voltage fluctuations during operation of the DC-DC converter, and wherein the transformer is embodied such that the two overlapping turns of each overlapping pair of (a) a turn of the second primary winding (Np2) and (b) a turn of the secondary winding (Ns), are subject to matching voltage fluctuations during operation of the DC-DC converter.

2. DC-DC converter according to claim 1, wherein the DC-DC converter comprises at least one further pair of arms parallel to the first arm and the second arm, with each further pair of arms comprising (i) a further upper arm between the split-capacitor node (9) and the prime terminal (1) of the first switch (S1), which further upper arm comprises a further upper primary winding (Np3) and a further upper capacitor (Cr3), with the further upper primary winding (Np3) having the same number of turns *N* as the first primary winding (Np1) and the second primary winding (Np2), with the further upper capacitor (Cr3) having a same capacitance as the first capacitor (Cr1) and the second capacitor (Cr2), and with the further upper capacitor (Cr3) being electrically connected between the split-capacitor node (9) and the further upper primary winding (Np3) and with the further upper primary winding (Np3) being electrically connected between the further upper capacitor (Cr3) and the prime terminal (1) of the first switch (S1), and (ii) a further lower arm between the split-capacitor node (9) and the secondary terminal (4) of the second switch (S2), which further lower arm comprises a further lower primary winding (Np4) and a further lower capacitor (Cr4), with the further lower primary winding (Np4) having the same number of turns *N* as the first primary winding (Np1) and the second primary winding (Np2) and with the further lower capacitor (Cr4) having a same capacitance as the first capacitor (Cr1) and the second capacitor (Cr2), and with the further lower capacitor (Cr4) being electrically connected between the split-capacitor node (9) and the further lower primary winding (Np4) and with the further lower primary winding (Np4) being electrically connected between the further lower capacitor (Cr4) and the secondary terminal (4) of the second switch (S2).

3. DC-DC converter according to claim 1 or 2, wherein (i) the transformer comprises a first fixed-potential overlapping pair of (a) the turn (10) of the first primary winding (Np1) that is electrically connected to the prime terminal (1) of the first switch (1) or of the turn of a further upper primary winding (Np3) that is electrically connected to the prime terminal (1) of the first switch (S1), and (b) a turn of the secondary winding (Ns) that is subject to a substantially static potential during operation of the DC-DC converter, and/or (ii) the transformer comprises a second fixed-potential overlapping pair of (a) the turn (11) of the second primary winding (Np2) that is electrically connected to the secondary terminal (4) of the second switch (S2) or of the turn of a further lower primary winding (Np4) that is electrically connected to the secondary terminal (4) of the second switch (S2), and (b) a turn of the secondary winding (Ns) that is subject to a substantially static potential during operation of the DC-DC converter.

4. DC-DC converter according to any one of the preceding claims, wherein the transformer is embodied as a planar transformer (22) comprising a plurality of layers, wherein between any two adjacent layers of the plurality of layers, a dielectric medium (21), in particular embodied as FR4, is arranged, and wherein the turns of the first primary winding (Np1), the turns of the second primary winding (Np2), the turns of the secondary winding (Ns) and the turns of any further upper primary winding (Np3) and of any further lower primary winding (Np4) are arranged in the plurality of layers.

5. DC-DC converter according to claim 4, wherein the two outer layers of the planar transformer (22) comprise turns of the secondary winding (Ns).

6. DC-DC converter according to claim 4 or 5, wherein for the first fixed-potential overlapping pair, the respective turn (10) of the first primary winding (Np 1) or of the further upper primary winding (Np3) is arranged in a first layer of the planar transformer (22) that is adjacent to a second layer of the planar transformer in which the respective turn of the secondary winding (Ns) is arranged.

7. DC-DC converter according to claim 6, wherein for the second fixed-potential overlapping pair, the respective turn (11) of the second primary winding (Np2) or of the further lower primary winding (Np4) is arranged in a third layer of the planar transformer (22) that is adjacent to a fourth layer of the planar transformer (22) in which the respective turn of the secondary winding is arranged.

8. DC-DC converter according to claim 7, wherein (i) the second layer and the fourth layer are physically distinct layers of the planar transformer (22), wherein the parts of the secondary winding arranged in the second layer and the fourth layer are electrically connected to one another, or wherein (ii) the second layer and the fourth layer are embodied as a common layer of the planar transformer (22).

9. DC-DC converter according to any one of claims 4 to 8, wherein the turn (12) of the first primary winding (Np1) that is electrically connected to the first capacitor (Cr1, C1) is arranged in a fifth layer of the planar transformer (22), and wherein the turn (13) of the second primary winding (Np2) that is electrically connected to the second capacitor (Cr2, C2) is arranged in a sixth layer of the planar transformer (22), with the fifth layer being adjacent to the sixth layer.

10. DC-DC converter according to any one of claims 4 to 9, wherein any two overlapping layers of the planar transformer (22), any two overlapping layers being a layer in which at least one turn of the primary side (Np1, Np2, Np3, Np4) is arranged and an adjacent layer in which at least one turn of the secondary side (Ns) is arranged, are embodied in a symmetrical manner.

11. DC-DC converter according to any one of the preceding claims, wherein the DC-DC converter is embodied as a half-bridge converter (23), with electric potentials at the half-bridge node (6) and at the split-capacitor node (9) being substantially equal during operation of the half-bridge converter (23).

12. DC-DC converter according to any one of claims 1 to 10, wherein the DC-DC converter is embodied as a dual active half-bridge converter (24), wherein the dual active half-bridge converter (24) is embodied such that in an equivalent circuit of the dual active half-bridge converter (24), an inductance (L) is present between the half-bridge node (6) and the split-capacitor node (9), which inductance (L) is in particular at least partly provided by a leakage inductance of the transformer, and wherein the rectifier circuit (S3, S4, C3, C4) comprises a third capacitor (C3) and a fourth capacitor (C4) having a same capacitance, with the third capacitor (C3) being electrically connected between a first end of the secondary winding (Ns) and a positive terminal (14) of a DC output and with the fourth capacitor (C4) being electrically connected between the first end of the secondary winding (Ns) and a negative terminal (15) of the DC output, and wherein the rectifier circuit (S3, S4, C3, C4) further comprises a second half-bridge circuit comprising a third switch (S3) and a fourth switch (S4), with a prime terminal (16) of the third switch (S3) being electrically connected to the positive terminal (14) of the DC output, with a secondary terminal (19) of the fourth switch (S4) being electrically connected to the negative terminal (15) of the DC output, and with a secondary terminal (17) of the third switch (S3) and a prime terminal (18) of the fourth switch (S4) being electrically connected to a common second half-bridge node (26), with the second half-bridge node (26) being electrically connected to a second end of the secondary winding (Ns), and wherein a second half-bridge control circuit, in particular embodied as the half-bridge control circuit (20), is configured to control the second half-bridge circuit by providing drive signals for selectively opening or closing the third switch (S3) and the fourth switch (S4).

13. DC-DC converter according to any one of claims 1 to 10, wherein the DC-DC converter is embodied as an LLC resonant converter (25), with the LLC resonant converter (25) comprising a resonant tank circuit (Lr, Cr1, Cr2, Cr3, Cr4), wherein the resonant tank circuit (Lr, Cr1, Cr2, Cr3, Cr4) and/or the transformer are embodied such that in an equivalent circuit of the LLC resonant converter (25), the resonant tank circuit (Lr, Cr1, Cr2, Cr3, Cr4) and/or the transformer provide a resonant inductance (Lr) between the half-bridge node (6) and the split-capacitor node (9), wherein the resonant tank circuit (Lr, Cr1, Cr2, Cr3, Cr4) comprises the first capacitor(Cr1) and the second capacitor (Cr2).

14. DC-DC converter according to claim 13, wherein the resonant tank circuit (Lr, Cr1, Cr2, Cr3, Cr4) comprises a resonant inductor, wherein the resonant inductance (Lr) is at least partly provided by the resonant inductor, and in particular wherein the resonant inductance (Lr) is at least partly provided by a leakage inductance of the transformer.

15. DC-DC converter according to any one of the preceding claims, further comprising a low-pass filter circuit that is electrically connected to the rectifier circuit (D1, D2, D3, D4, Lout, Cout, S3, S4, C3, C4, C5, C6).
